(19) Europäisches Patentamt
European Patent Office
Office européen des brevets

(11) EP 1 315 420 B1

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **01980303.0**

(22) Anmeldetag: **30.08.2001**

(51) Int Cl.:
***A01N 47/36*** *(2006.01)* *A01N 47/36* *(2006.01)*
*A01N 47/36* *(2006.01)* *A01N 41/10* *(2006.01)*

(86) Internationale Anmeldenummer:
**PCT/EP2001/009999**

(87) Internationale Veröffentlichungsnummer:
**WO 2002/017719 (07.03.2002 Gazette 2002/10)**

# (54) HERBIZIDE MISCHUNGEN

HERBICIDE MIXTURES

MELANGES HERBICIDES

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.08.2000 DE 10043121**

(43) Veröffentlichungstag der Anmeldung:
**04.06.2003 Patentblatt 2003/23**

(60) Teilanmeldung:
**06110045.9**

(73) Patentinhaber: **BASF Aktiengesellschaft
67056 Ludwigshafen (DE)**

(72) Erfinder:
- **ZAGAR, Cyrill
68167 Mannheim (DE)**
- **NUYKEN, Wessel
67166 Otterstadt (DE)**
- **SCHMIDT, Oskar
67105 Schifferstadt (DE)**
- **JÄGER, Karl-Friedrich
67117 Limburgerhof (DE)**
- **WESTPHALEN, Karl-Otto
67346 Speyer (DE)**

(56) Entgegenhaltungen:
**WO-A-00/03591** **WO-A-00/03592**
**WO-A-00/08932** **WO-A-00/08936**
**WO-A-01/35741** **WO-A-01/37652**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 315 420 B1

## Beschreibung

Die vorliegende Erfindung betrifft eine herbizide Mischung mit synergistischer Wirkung aus Tritosulfuron und mindestens einem weiteren Herbizid sowie gegebenenfalls mindestens einem flüssigen oder festen Trägerstoff und gegebenenfalls mindestens einem oberflächenaktiven Stoff.

Außerdem betrifft die Erfindung ein Verfahren zur Bekämpfung von unerwünschtem Pflanzenwuchs, insbesondere in Getreide- oder Maiskulturen.

Herbizide Mischungen von Sulfonylharnstoffen, wie beispielsweise Tritosulfuron, mit bestimmten anderen Herbiziden sind aus der WO 97/10714 bekannt.

Über die in der WO 97/10714 hinaus sind noch weitere Herbizide bekannt wie beispielsweise aus Farm Chemicals Handbook 2000, Vol. 86, Meister Publishing Company, 2000 (Sulfosulfuron, Acifluorfen, Acifluorfen-Natriumsalz, Carfentrazon-ethyl, Cinidon-ethyl, Flumiclorac-pentyl, Fluthiacet-methyl, Oxyfluorfen, 2,4-D, Dicamba, Dichlorprop-P, Fluroxypyr-meptyl, MCPA, Mecoprop-P, Diflufenican, Flurtamone), EP 559814 (Tritosulfuron, Tritosulfuron-Natriumsalz, Tritosulfuron-Calciumsalz), EP 507171 (Flucarbazon, Propoxycarbazon), The 1997 Brighton Crop Protection Conference Weeds, Conference Proceedings Vol. 1, S. 45 (Fluazolat (= JV 485 oder Isopropazol)) und S. 59 (Azafenidin), US 5344812 (Benzfendizon) Agrow, Nr. 324, 12.03.1999, S. 26 (Tritosulfuron, Procarbazon-Natriumsalz, Florasulam, Benzfendizon, Butafenacil), Agrow, Nr. 347, 03.03.2000, S. 22 (Flufenpyr, Flufenpyr-ethyl), WO 97/15576 (Profluazol), EP 361114 (Pyraflufen-ethyl), B. Hock, C. Fedtke, R.R. Schmidt, Herbizide, Georg Thieme Verlag, Stuttgart 1995, S. 154 (Flurochloridone), S. 254 (2,4-DB), S. 238 (Fluroxypyr) EP 239414 (Beflubutamid). Flupyrsulfuron-methyl, Foramsulfuron, Iodosulfuron-methyl, Mesosulfuron-methyl, Mesotrione, Pethoxamid und Amicarbazone sind bekannte Herbizide und Mefenpyr-diethyl und Isoxadifen-ethyl bekannte Safener, s. z. B. The Compendium of Pesticide Common Names (http://www.hclrss.demon.co.uk/index.html).

Bei Pflanzenschutzmitteln ist es grundsätzlich wünschenswert, die spezifische Wirkung eines Wirkstoffs und die Wirkungssicherheit zu erhöhen. Der Erfindung lag daher die Aufgabe zugrunde, die Wirkung des Tritosulfurons der Formel I oder eines landwirtschaftlich brauchbaren Salzes davon zu erhöhen.

Diese Aufgabe wurde gelöst durch eine herbizide Mischung, enthaltend

a) Tritosulfuron der Formel I oder ein landwirtschaftlich brauchbares Salz davon

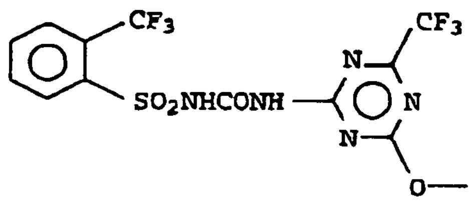

I

b) Florasulam der Formel II, sowie dessen landwirtschaftlich brauchbaren Salze.

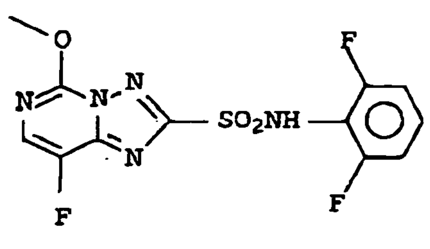

II

Bei der erfindungsgemäßen herbiziden Mischung können noch weitere Herbizide c) mitverwenden werden, ausgewählt aus der Gruppe bestehend aus Acifluorfen, Azafenidin, Benzfendizon, Butafenacil, Cinidon-ethyl, Flufenpyr, Flufenpyr-ethyl, Flumiclorac-pentyl, Fluthiacet-methyl, Oxyfluorfen, Profluazol, 2,4-D, 2,4-DB, Dicamba, Dichlorprop-P, Fluroxypyr, Fluroxypyr-meptyl, MCPA und Mecoprop-P.

Darüber hinaus können auch Safener d) mitverwendet werden, ausgewählt aus der Gruppe bestehend aus Mefenpyr-diethyl der Formel XXXVI und Isoxadifen-ethyl der Formel XXXVII, um die Kulturpflanzenverträglichkeit zu erhöhen.

Ferner wurden Verfahren zur Bekämpfung von unerwünschtem Pflanzenwuchs mit der erfindungsgemäßen Mischung sowie deren Verwendung zur Bekämpfung von unerwünschtem Pflanzenwuchs, insbesondere in Getreide-

und Maiskulturen, gefunden.

Die Herbizide c) haben folgende Formeln:

Acifluorfen der Formel VI,

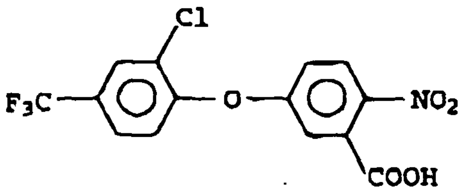

VI

Azafenidin der Formel VII,

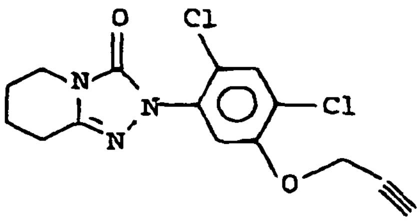

VII

Benzfendizon der Formel VIII,

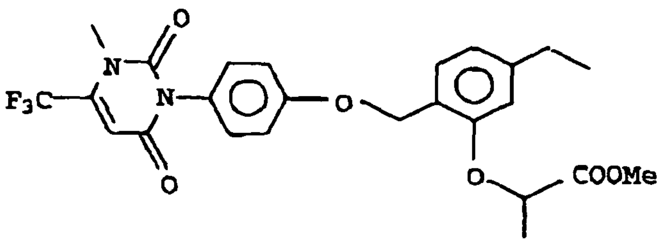

VIII

Butafenacil der Formel IX

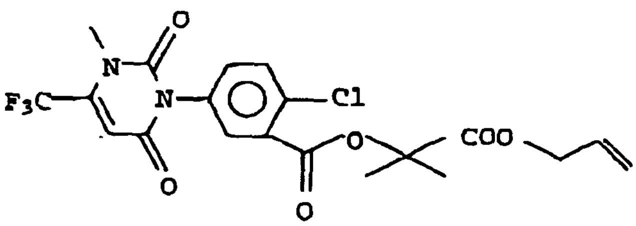

IX

Cinidon-ethyl der Formel XI

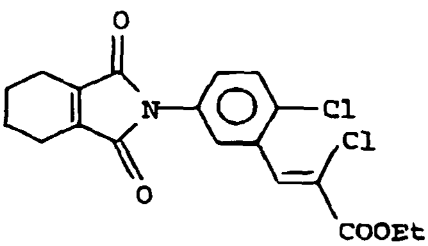

XI

Flufenpyr der Formel XIII,

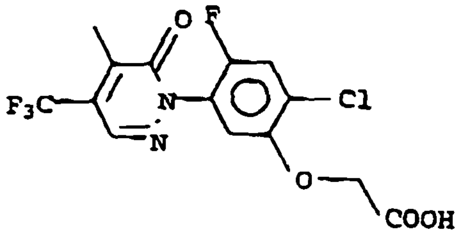

XIII

Flufenpyr-ethyl der Formel XIV,

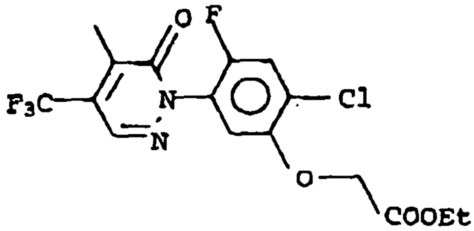

XIV

Flumiclorac-pentyl der Formel XV,

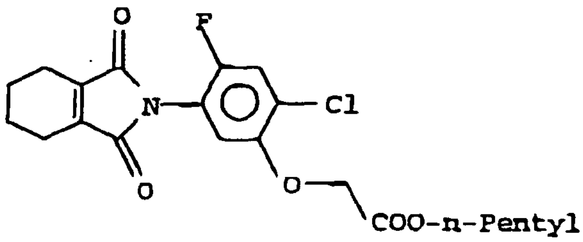

XV

Fluthiacet-methyl der Formel XVI

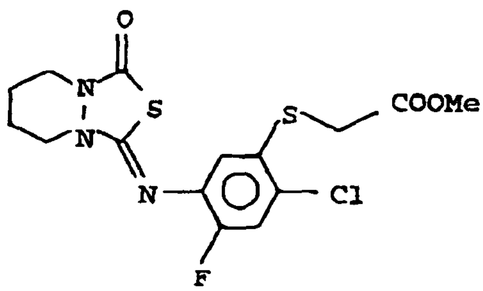

XVI

Oxyfluorfen der Formel XVII,

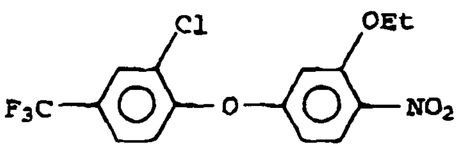

XVII

Profluazol der Formel XVIII,

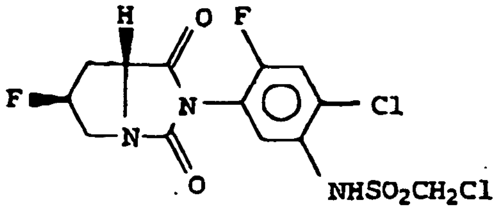

XVIII

2,4-D der Formel XX,

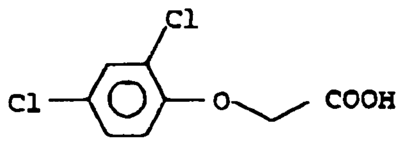

XX

2,4-DB der Formel XXI,

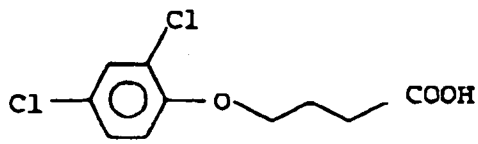

XXI

Dicamba der Formel XXII,

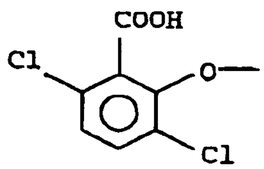

XXII

Dichlorprop-P der Formel XXIII,

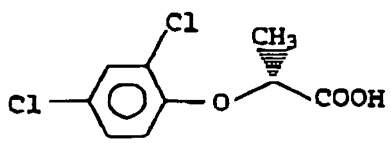

XXIII

Fluroxypyr der Formel XXIV

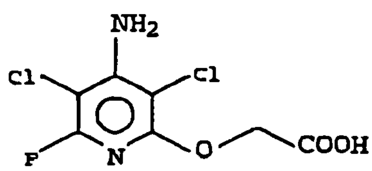

XXIV

Fluroxypyr-meptyl der Formel XXV

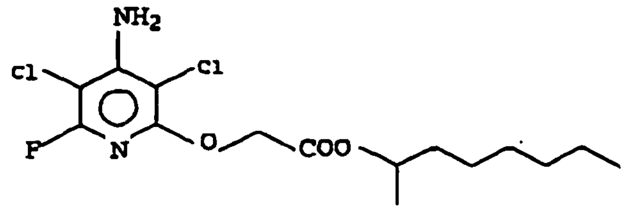

XXV

MCPA der Formel XXVI,

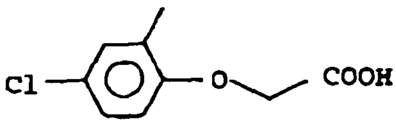

XXVI

Mecoprop-P der Formel XXVII.

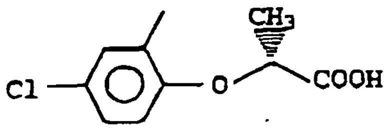

XXVII

Die Safener d) haben die folgenen Formeln XXXVI - XXXVII.

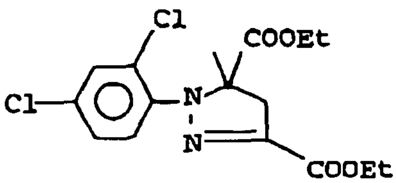

XXXVI

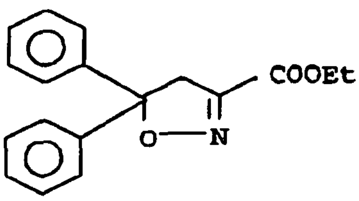

XXXVII

Gegenstand der vorliegenden Erfindung sind sowohl die genannten Herbizide als auch ihre landwirtschaftlich brauchbaren Salze. Insbesondere die Wirkstoffe Tritosulfuron, Florasulam, Acifluorfen, Flufenpyr, 2,4-D, 2,4-DB, Dicamba, Dichlorprop-P, Fluroxypyr, MCPA und Mecoprop-P können gewünschtenfalls als Salze landwirtschaftlich brauchbarer Kationen Bestandteile der erfindungsgemäßen Mischungen sein. Landwirtschaftlich brauchbare Kationen sind beispielsweise Alkalimetallkationen wie Lithium, Natrium oder Kalium, Erdalkalimetallkationen wie beispielsweise Magnesium oder Calcium. In Betracht kommen aber auch organische Kationen wie beispielsweise Trimethylsulfonium, Tetramethylammonium, Tetraethylammonium, Tetrabutylammonium, Benzyltriethylammonium, Ethanolammonium oder Diethylethanolammonium. Methylammonium, Dimethylammonium, Trimethylammonium, Isopropylammonium, 2-(2-Hydroxyethoxy)ethylammonium.

Weiterhin Gegenstand der Erfindung sind die Alkylamide, Arylamide, Alkylester, Alkoxyalkylester und Alkylthioester derjenigen genannten Herbizide, die eine Carbonsäure-Funktion (-COOH) aufweisen, insbesondere der Wirkstoffe 2,4-D, 2,4-DB, Dicamba, Dichlorprop-P, Fluroxypyr, MCPA und Mecoprop-P.

Bevorzugte Alkylamide sind beispielsweise das Methyl- oder Dimethylamid. Bevorzugte Arylamide sind beispielsweise das Anilid oder das 2-Chloranilid. Bevorzugte Alkylester sind die geradkettigen oder verzweigten $C_1$-$C_{10}$-Alkylester, beispielsweise der Methyl-, Ethyl-, Propyl-, Isopropyl-, Butyl-, Isobutyl- oder Isooktylester. Bevorzugte Alkoxyalkylester sind die geradkettigen oder verzweigten $C_1$-$C_4$-Alkoxyethylester, beispielsweise der Methoxyethyl-, Ethoxyethyl- oder Butoxyethylester. Bevorzugte Alkylthioester sind die geradkettigen oder verzweigten $C_1$-$C_{10}$-Alkylthioester, beispielsweise der Ethylthioester.

Als herbizide Mischungen bevorzugt sind die nachfolgend genannten Mischungen; soweit die Wirkstoffe Tritosulfuron, Florasulam, Acifluorfen, Flufenpyr, 2,4-D, 2,4-DB, Dicamba, Dichlorprop-P, Fluroxypyr, MCPA und/oder Meeoprop-P Bestandteile der Mischungen sind, sind außerdem auch diejenigen Mischungen bevorzugt, bei denen die genannten Wirkstoffe durch ihre Natrium-, Kalium- oder Calciumsalze ersetzt sind; des weiteren, soweit die Wirkstoffe 2,4-D, 2,4-DB, Dicamba, Dichlorprop-P, Fluroxypyr, MCPA und/oder Mecoprop-P Bestandteile der Mischungen sind, sind außerdem auch diejenigen Mischungen bevorzugt, bei denen die genannten Wirkstoffe durch ihre Ethanolammonium-, Diethanolammonium-, Methylammonium-, Dimethylammonium-, Trimethylammonium-, Isopropylammonium- oder 2-(2-Hydroxyethoxy)ethylammonium-Salze, ihre Methyl- oder Dimethylamide, ihre Anilide oder 2-Chloranilide, ihre Methyl-, Ethyl- Propyl-, Isopropyl-, Butyl-, Isobutyl-, Isooktyl-, Methoxyethyl-, Ethoxyethyl- oder Butoxyethylester oder ihre Ethylthioester ersetzt sind:

Tritosulfuron + Florasulam, Tritosulfuron + Florasulam + Azafenidin, Tritosulfuron + Florasulam + Benzfendizon, Tritosulfuron + Florasulam + Butafenacil, Tritosulfuron + Florasulam + Cinidon-ethyl, Tritosulfuron + Florasulam + Flufenpyr, Tritosulfuron + Florasulam + Flufenpyr-ethyl, Tritosulfuron + Florasulam + Flumiclorac-pentyl, Tritosulfuron + Florasulam + Fluthiacet-methyl, Tritosulfuron + Florasulam + Oxyfluorfen, Tritosulfuron + Florasulam + Profluazol, Tritosulfuron + Florasulam + 2,4-D, Tritosulfuron + Florasulam + 2,4-DB, Tritosulfuron + Florasulam + Dicamba, Tritosulfuron + Florasulam + Dichlorprop-P, Tritosulfuron + Florasulam + Fluroxypyr, Tritosulfuron + Florasulam + Fluroxypyr-meptyl, Tritosulfuron + Florasulam + MCPA, Tritosulfuron + Florasulam + Mecoprop-P.

Die Mischungsverhältnisse der Komponenten a) zu b) liegen bei einem Gewichtsverhältnis von 1:0,1 bis 1:10, bevorzugt 1:0,2 bis 1:5 und besonders bevorzugt von 1:0,5 bis 1:1, besonders bevorzugt von 1: 0,3 bis 1:3.

Werden die Komponenten c) oder d) mitverwendet, liegen die Mischungsverhältnisse der Komponenten a) zu b) zu c) zu d) bei einem Gewichtsverhältnis von 1:0,1:0,1:0,1 bis 1:10:10:10, bevorzugt 1:0,2;0,2:0,2 bis 1:5:5:5, besonders bevorzugt 1:0,3:0,3:0,3 bis 1:3:3:3.

In der anwendungsfertigen Zubereitung können die Komponenten a) bis d) in suspendierter, emulgierter oder gelöster Form gemeinsam oder getrennt formuliert vorliegen. Die Anwendungsformen richten sich ganz nach den Verwendungszwecken.

Die erfindungsgemäßen Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen. Vernebeln, Verstäuben, Verstreuen oder Gießen angewendet werden. Die Anwendungsformen richten sich nach den Verwendungszwecken; sie sollten in jedem Fall möglichst die feinste Verteilung der Wirkstoffe gewährleisten.

Die herbiziden Mittel enthalten die Komponenten a) und b) sowie gegebenenfalls c)und d) und für die Formulierung von Pflanzenschutzmitteln übliche Hilfsstoffe.

Als inerte Hilfsstoffe kommen im Wesentlichen in Betracht:

Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z.B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z.B. Amine wie N-Methylpyrrolidon und Wasser.

Wäßrige Anwendungsformen können aus Entulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Wirkstoffe a) bis d) als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Konzentrationen der Wirkstoffe in den anwendungsfertigen Zubereitungen können in weiten Bereichen variiert werden. Die Formulierungen enthalten im allgemeinen etwa von 0,001 bis 98 Gew.-%, vorzugsweise 0,01 bis 95 Gew.-%, an Wirkstoffen. Die Wirkstoffe werden dabei in einer Reinheit von 90 % bis 100 %, vorzugsweise 95 % bis 100 % (nach NMR-Spektrum) eingesetzt.

Die Komponenten a) und b) mit ggf. c) und d) können gemeinsam oder getrennt, zur gleichen Zeit oder nacheinander, vor, während oder nach dem Auflaufen der Pflanzen ausgebracht werden.

Sind die Wirkstoffe a) bis b) und ggf. c) und d) für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die erforderliche Aufwandmenge an reiner Wirkstoffmischung, d.h. a) und b) sowie ggf. c) und d) ohne Formulierungshilfsmittel, ist abhängig von der Zusammensetzung des Pflanzenbestandes, vom Entwicklungsstadium der Pflanzen, von den klimatischen Verhältnissen am Einsatzort sowie von der Anwendungstechnik. Im allgemeinen beträgt die Aufwandmenge von a) + b) 0,001 bis 3 kg/ha, vorzugsweise 0.01 bis 1 kg/ha aktive Substanz (a.S.).

Die Mittel werden den Pflanzen vornehmlich durch Blattspritzung zugeführt. Dabei kann die Ausbringung z.B. mit Wasser als Trägerstoff durch übliche Spritztechniken mit Spritzbrühe-Mengen von etwa 100 bis 1000 l/ha erfolgen. Eine Anwendung der herbiziden Mittel im sogenannten "Low Volume"- und "Ultra-low-Volume"-Verfahren ist ebenso möglich wie ihre Applikation in Form von sogenannten Mikrogranulaten.

Außerdem kann es von Nutzen sein, die erfindungsgemäßen Mittel auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die erfindungsgemäßen Mischungen können auch in Kulturpflanzen zur Anwendung gebracht werden, die durch gentechnische oder züchterische Methoden gegen Herbizide und/oder Schädlinge und/oder phytopathogene Pilze bzw. Bakterien resistent gemacht worden sind. In Betracht kommen hier vorzugsweise gentechnisch veränderte Getreide- und Maispflanzen, insbesondere Maispflanzen, die gegen herbizide PPO-Inhibitoren, wie beispielsweise Acifluorfen, Azafenidin, Benzfendizon, Butafenacil, Cinidon-ethyl, Flufenpyr, Flufenpyr-ethyl, Flumiclorac-pentyl, Fluthiacetmethyl, Oxyfluorfen. Profluazol oder Pyraflufen-ethyl resistent sind, oder Maispflanzen, die durch die gentechnische Einführung des Bt-Toxins resistent gegen den Befall durch bestimmte Insekten sind oder Getreide- oder Maispflanzen, die gegen herbizide EPSP-Synthase-Inhibitoren, wie z. B. Glyphosate oder Sulfosate, oder gegen herbizide ALS-Inhibitoren, wie z. B. Imazapic, Imazamethabenzmethyl, Imazamox, Imazapyr, Imazaquin oder Imazethapyr, resistent sind.

Anwendungsbeispiele

Der Einfluß der erfindungsgemäßen herbiziden Mischungen aus den Komponenten a) und b) und ggf. c) und d) auf das Wachstum von unerwünschten Planzen im Vergleich zu den herbiziden Wirkstoffen allein lässt sich durch die folgenden Gewächahausversuche belegen:

Für die Nachauflaufbehandlung werden die Testpflanzen je nach Wuchsform erst bis zu einer Wuchshöhe von 3 bis 20 cm angezüchtet und erst dann behandelt. Die herbiziden Mittel werden hierbei in Wasser als Verteilungsmittel suspendiert oder emulgiert und mittels fein verteilender Düsen gespritzt.

Tritosulfuron wird als Emulsionskonzentrat formuliert und unter Zugabe von derjenigen Menge an Lösungsmittelsystem in die Spritzbrühe eingesetzt, mit welcher der wirkstoff ausgebracht wird.

Die jeweils angegebene Komponente b) sowie ggf. c) und/oder d) und/oder e) wird als 10 gew.-%iges Emulsionskonzentrat formuliert und unter Zugabe von derjenigen Menge an Lösungsmittelsystem in die Spritzbrühe eingesetzt, mit welcher der Wirkstoff ausgebracht wird.

Die Versuchsperiode erstreckt sich über 20-22 Tage. Während dieser Zeit werden die Pflanzen gepflegt, wobei ihre Reaktionen auf die Wirkstoff-Behandlungen erfaßt werden.

Bewertet wird die Schädigung durch die chemischen Mittel anhand einer Skala von 0 bis 100 % im Vergleich zu den unbehandelten Kontrollpflanzen. Dabei bedeutet 0 keine Schädigung und 100 eine völlige Zerstörung der Pflanzen.

Nach der Methode von S. R. Colby (1967) "Calculating synergistic and antagonistic responses of herbicide combinations", Weeds 15, S. 22ff. wird derjenige Wert E errechnet, der bei einer nur additiven Wirkung der Einzelwirkstoffe zu erwarten ist.

$$E = X + Y - (XY/100)$$

wobei

X = Prozentsatz Wirkung mit Präparat A bei einer Aufwandmenge a;

Y = Prozentsatz Wirkung mit Präparat B bei einer Aufwandmenge b;

E = zu erwartende Wirkung (in %) durch A + B bei Aufwandmengen a + b

bedeuten.

Ist der gemessene Wert höher als der nach Colby errechnete Wert E, so liegt eine synergistische Wirkung vor.

**Patentansprüche**

1. Herbizide Mischung, enthaltend

   a) Tritosulfuron der Formel I oder ein landwirtschaftlich brauchbares Salz davon

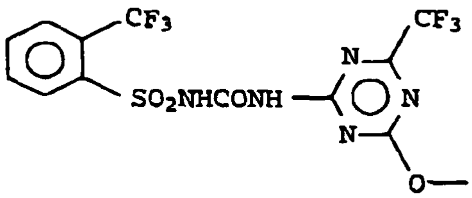

I

   b) Florasulam der Formel II, sowie dessen landwirtschaftlich brauchbaren Salze,

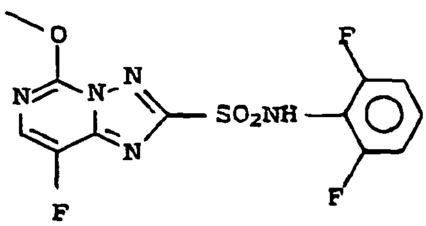

II

2. Herbizide Mischung nach Anspruch 1, weiterhin enthaltend ein Herbizid c), ausgewählt aus der Gruppe bestehend aus Acifluorfen, Azafenidin, Benzfendizon, Butafenacil, Cinidon-ethyl, Flufenpyr, Flufenpyr-ethyl, Flumiclorac-pentyl, Fluthiacet-methyl, Oxyfluorfen, Profluazol, 2,4-D, 2,4-DB, Dicamba, Dichlorprop-P, Fluroxypyr, Fluroxypyr-meptyl, MCPA und Mecoprop-P.

3. Herbizide Mischung nach einem der Ansprüche 1 oder 2, weiterhin enthaltend einen Safener d), ausgewählt aus

der Gruppe bestehend aus Mefenpyr-diethyl der Formel XXXVI und Iaoxadifen-ethyl der Formel XXXVII

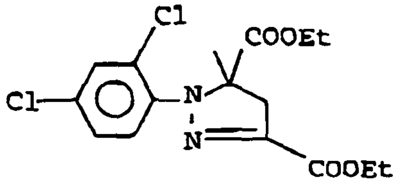

XXXVI

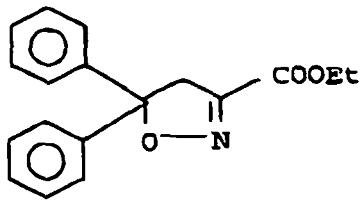

XXXVII.

4. Herbizide Mischung nach einem der Ansprüche 1 bis 3, weiterhin enthaltend mindestens einen flüssigen oder festen Trägerstoff.

5. Herbizide Mischung nach einem der Ansprüche 1 bis 4, weiterhin enthaltend mindestens einen oberflächenaktiven Stoff.

6. Verfahren zur Bekämpfung von unerwünschtem Pflanzenwuchs, **dadurch gekennzeichnet, daß** man eine herbizid wirksame Menge einer Mischung gemäß einem der Ansprüche 1 bis 3 auf Pflanzen, deren Lebensraum oder Saatgut einwirken läßt.

7. Verfahren zur Bekämpfung von unerwünschtem Pflanzenwuchs, **dadurch gekennzeichnet, daß** man die herbizide Mischung gemäß einem der Ansprüche 1 bis 5 gleichzeitig oder nacheinander, vor, während oder nach dem Auflaufen der unerwünschten Pflanzen ausbringt.

8. Verfahren zur Bekämpfung von unerwünschtem Pflanzenwuchs, **dadurch gekennzeichnet, daß** die Blätter der unerwünschten Pflanzen gleichzeitig oder nacheinander mit der herbiziden Mischung gemäß einem der Ansprüche 1 bis 5 behandelt werden.

9. Verwendung der herbiziden Mischungen gemäß einem der Ansprüche 1 bis 5 zur Bekämpfung von unerwünschtem Pflanzenwuchs.

10. Verwendung der herbiziden Mischungen gemäß einem der Ansprüche 1 bis 5 zur Bekämpfung von unerwünschtem Pflanzenwuchs in Getreidekulturen.

11. Verwendung der herbiziden Mischungen gemäß einem der Ansprüche 1 bis 5 zur Bekämpfung von unerwünschtem Pflanzenwuchs in Maiskulturen.

## Claims

1. A herbicidal mixture, comprising

   a) tritosulfuron of the formula I or an agriculturally useful salt thereof

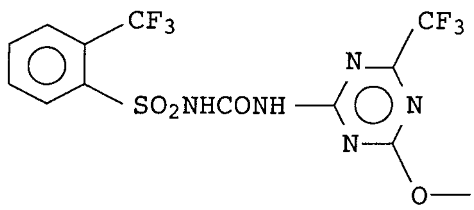

I

b) florasulam of the formula II and its agriculturally useful salts,

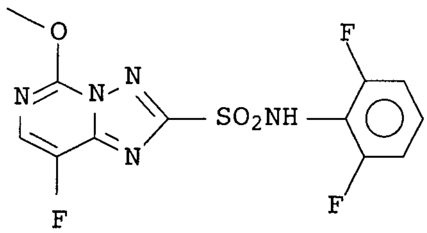

II

2. The herbicidal mixture according to claim 1, furthermore comprising a herbicide c) selected from the group consisting of acifluorfen, azafenidin, benzfendizone, butafenacil, cinidon-ethyl, flufenpyr, flufenpyr-ethyl, flumiclorac-pentyl, fluthiacet-methyl, oxyfluorfen, profluazol, 2,4-D, 2,4-DB, dicamba, dichlorprop-P, fluoroxypyr, fluoroxypyr-meptyl, MCPA and mecoprop-P.

3. The herbicidal mixture according to claim 1 or 2, furthermore comprising a saftener d) selected from the group consisting of mefenpyr-diethyl of the formula XXXVI and isoxadifen-ethyl of the formula XXXVII

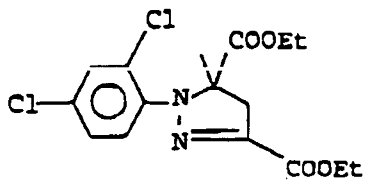

XXXVI

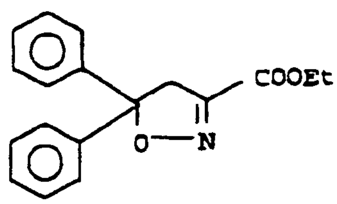

XXXVII.

4. The herbicidal mixture according to any of claims 1 to 3, furthermore comprising at least one liquid or solid carrier.

5. The herbicidal mixture according to any of claims 1 to 4, furthermore comprising at least one surfactant.

6. A method for controlling undesirable vegetation, which comprises allowing a herbicidally effective amount of a mixture according to any of claims 1 to 3 to act on plants, their habitat or seed.

7. A method for controlling undesirable vegetation, which comprises applying the herbicidal mixture according to any

of claims 1 to 5 simultaneously or successively, before, during or after emergence of the undesirable plants.

8. A method for controlling undesirable vegetation, wherein the leaves of the undesirable plants are treated simultaneously or successively with the herbicidal mixture according to any of claims 1 to 5.

9. The use of the herbicidal mixtures according to any of claims 1 to 5 for controlling undesirable vegetation.

10. The use of the herbicidal mixtures according to any of claims 1 to 5 for controlling undesirable vegetation in crops of cereals.

11. The use of the herbicidal mixtures according to any of claims 1 to 5 for controlling undesirable vegetation in crops of corn.

**Revendications**

1. Mélange herbicide, contenant :

a) du tritosulfuron de la formule I ou un sel de celui-ci utilisable en agriculture

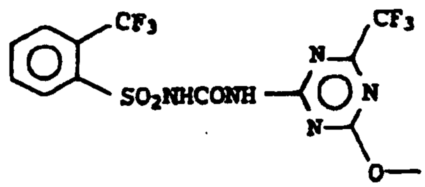

I

b) du florasulam de la formule II, ainsi que ses sels utilisables en agriculture,

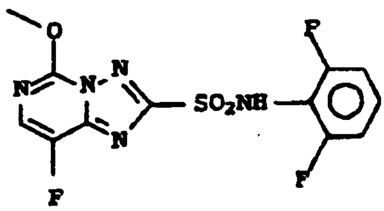

II

2. Mélange herbicide selon la revendication 1, contenant en outre un herbicide c), choisi dans le groupe formé par l'acifluorfen, l'azafenidin, le benzfendizon, le butafenacil, le cinidon éthyle, le flufenpyr, le flufenpyr éthyle, le flumiclorac pentyle, le fluthiacet méthyle, l'oxyfluorfen, le profluazol, le 2,4-D, le 2,4-DB, le dicamba, le dichlorprop-P, le fluroxypyr, le fluorxypyr meptyle, le MCPA et le mecoprop-P.

3. Mélange herbicide selon l'une quelconque des revendications 1 ou 2, contenant en outre un assainissant d), choisi dans le groupe formé par du mefenpyr diéthyle de la formule XXXVI et de l'isoxadifen éthyle de la formule XXXVII

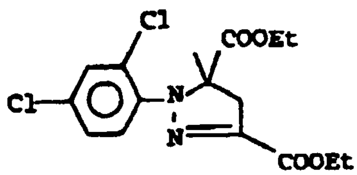

XXXVI

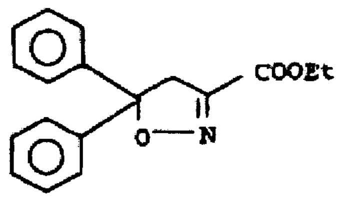

XXXVII.

4. Mélange herbicide selon l'une quelconque des revendications 1 à 3, contenant en outre au moins un véhicule liquide ou solide.

5. Mélange herbicide selon l'une quelconque des revendications 1 à 4, contenant en outre au moins une substance tensioactive.

6. Procédé de lutte contre une croissance végétale indésirable, **caractérisé en ce que** l'on fait agir sur des plantes, leur habitat ou des semences, une quantité à activité herbicide d'un mélange selon l'une quelconque des revendications 1 à 3.

7. Procédé de lutte contre une croissance végétale indésirable, **caractérisé en ce que** l'on applique le mélange herbicide selon l'une quelconque des revendications 1 à 5 simultanément ou successivement, avant, pendant ou après la levée des végétaux indésirables.

8. Procédé de lutte contre une croissance végétale indésirable, **caractérisé en ce que** les feuilles des végétaux indésirables sont traitées en même temps ou successivement par le mélange herbicide selon l'une quelconque des revendications 1 à 5.

9. Utilisation des mélanges herbicides selon l'une quelconque des revendications 1 à 5 pour la lutte contre une croissance végétale indésirable.

10. Utilisation des mélanges herbicides selon l'une quelconque des revendications 1 à 5 pour la lutte contre une croissance végétale indésirable dans des cultures de céréales.

11. Utilisation des mélanges herbicides selon l'une quelconque des revendications 1 à 5 pour la lutte contre une croissance végétale indésirable dans des cultures de maïs.